# EUROPÄISCHE PATENTSCHRIFT

(11) **EP 1 581 754 B1**
(45) Veröffentlichungstag und Bekanntmachung des Hinweises auf die Patenterteilung: **27.11.2013**
(21) Anmeldenummer: 03795756.0
(22) Anmeldetag: 17.12.2003
(51) Int. Cl.: F16H 37/08, F16H 15/42

(54) **STUFENLOS EINSTELLBARES GETRIEBE**
CONTINUOUSLY ADJUSTABLE GEAR
TRANSMISSION A REGLAGE CONTINU

(30) Priorität: 09.01.2003 DE 10300311
(43) Veröffentlichungstag der Anmeldung: 05.10.2005
(60) Teilanmeldung: 12002793.3
(73) Patentinhaber: Rohs, Ulrich,, 52351 Düren (DE)
(72) Erfinder: ROHS, Ulrich, 52351 Düren (DE); DRÄGER, Christoph, 52379 Langerwehe / Jürgersdorf (DE); BRANDWITTE, Werner, 52379 Langerwehe (DE)
(74) Vertreter: Reuther, Martin
(86) Internationale Anmeldenummer: PCT/DE2003/004165
(87) Internationale Veröffentlichungsnummer: WO 2004/063598

(56) Entgegenhaltungen:
- WO-A-01/44686
- US-A- 1 709 346
- US-A- 1 727 232
- US-A- 3 375 733
- US-A- 3 739 658
- US-A- 4 238 976
- PATENT ABSTRACTS OF JAPAN vol. 2000, no. 13, 5. Februar 2001 (2001-02-05) -& JP 2000 291759 A (TANBARA NOBUHIKO), 20. Oktober 2000 (2000-10-20)
- PATENT ABSTRACTS OF JAPAN vol. 018, no. 512 (M-1679), 27. September 1994 (1994-09-27) & JP 06 174034 A (ISUZU MOTORS LTD;OTHERS: 01), 21. Juni 1994 (1994-06-21)

## Beschreibung

Die Erfindung betrifft ein stufenlos einstellbares Getriebe, welches zwei stufenlos einstellbare Teilgetriebe, die parallel in einem Getriebestrang angeordnet sind, umfasst.

Ein derartiges Getriebe ist beispielsweise aus gattungsgemäßen US 1,709,346 bekannt, wobei bei diesen Anordnungen ein zentraler Kegel angetrieben wird, welcher mit einem oder mehreren achsparallel zu den Eingangskegel entgegengerichtet, mit über dem Kegelmantel konstanten Abstand zum Eingangskegel angeordneten Ausgangskegeln über jeweils einen Reibring wechselwirkt. Die Reibringe sind über ein gemeinsames Gestell entlang der jeweiligen Spalte verlagerbar, so dass zwischen dem Eingangskegel und den Ausgangskegeln stufenlos ein Übersetzungsverhältnis einstellbar ist. Die jeweiligen Abtriebe der Abtriebskegel sind mit den Planeten eines Planetengetriebes verbunden, so dass ein durch den Eingangskegel aufgebrachtes Drehmoment auf die jeweiligen Abtriebskegel aufgeteilt und über das Planetengetriebe wieder aufsummiert wird, wobei durch die Kopplung der Planeten eine konstante Drehzahl der Planeten sowie der Abtriebskegel erzwungen wird. Diese Anordnung löst zwar das bei derartigen Kegelreibringengetrieben, aber auch bei anderen stufenlos einstellbaren Getrieben (continuesly variable transmission CVT) auftretende Problem, dass die stufenlose Einstellbarkeit bei höheren Drehmomenten zu einem Schlupf führt, dem lediglich durch hohe Anpresskräfte und dementsprechende Verluste im Wirkungsgrad begegnet werden kann. Sie birgt jedoch das große Problem, dass bereits kleinste Fertigungstoleranzen bzw. -ungenauigkeiten zu anderweitigen Reibungsverlusten führen.

Auch die JP 2000-291759 A offenbart ein derartiges Kegelreibringgetriebe.

Zwei getrennte, parallele stufenlos einstellbare Teilgetriebe über ein Summengetriebe miteinander auf einen gemeinsamen Antriebsstrang zu führen ist hingegen aus der JP 06-174034 A bzw. aus der US 4,238,976 bekannt.

Es ist daher Aufgabe vorliegender Erfindung, ein stufenlos einstellbares Getriebe bereitzustellen, welches auch höhere Drehmomente betriebssicher und unter geringen Verlusten übertragen kann.

Als Lösung schlägt die Erfindung ein stufenlos einstellbares Getriebe mit wenigstens zwei stufenlos einstellbaren Teilgetriebe, die parallel in einem Getriebestrang angeordnet sind, vor, welches sich dadurch auszeichnet, dass die beiden stufenlos einstellbaren Teilgetriebe über ein Summengetriebe auf ein Eingangs- bzw. Ausgangsglied geschaltet sind, welches stufenlos einstellbare Getriebe die Merkmale der Ansprüche 1 oder 6 aufweist.

Die Verwendung eines Summengetriebes, auch Überlagerungsgetriebe genannt, hat den Vorteil, dass identische Drehzahlen bzw. exakt festgelegte Drehzahlen für eines der Getriebeglieder der Teilgetriebe, wie sie beim Stand der Technik notwendig sind, nicht erzwungen werden. Vielmehr leisten beide Teilgetriebe ihren eigenen, drehzahlabhängigen Beitrag zur resultierenden Drehzahl des Summengetriebes. Die erfindungsgemäße Anordnung ermöglicht es somit, beide Teilgetriebe getrennt anzusteuern und auch zu regeln, und somit die Vorteile zu nutzen, die sich aus einer Zerlegung eines stufenlos einstellbaren Getriebes in zwei stufenlos einstellbare Teilgetriebe ergeben, wie beispielsweise eine Aufspaltung des Drehmoments auf die beiden Teilgetriebe, ohne dass hierdurch die Nachteile, die aus einer erzwungenen Drehzahl resultieren, wie beispielsweise Reibungsverluste oder ein erhöhter Regelungsaufwand, in Kauf genommen werden müssen.

Die an sich asymmetrische und damit freie Verschaltung der beiden Teilgetriebe über das Summengetriebe bedingt somit in ungeahnter Weise Vorteile hinsichtlich der Getriebekonzeption bzw. -nutzung, insbesondere hinsichtlich des Wirkungsgrades sowie hinsichtlich der Anforderungen an die Steuerung, die bei einer Symmetrie, wie sie durch die Kopplung der Planeten eines Planetengetriebes erzwungen wird, nicht möglich ist.

Typische Vertreter eines Summengetriebes sind beispielsweise Planetengetriebe, bei welchen zwei der drei Getriebe Bestandteile (Planeten, Sonnenrad, Außenrad) mit den beiden Teilgetrieben verbunden sind und das dritte Getriebeglied als Ab- bzw. Antrieb genutzt wird, wobei die Planeten als ein Getriebeglied gemeinsam genutzt werden, bzw. ein Differential, bei welchem die beiden Teilgetriebe jeweils mit einem der differenzierenden Glieder des Differentials verbunden sind.

Die beiden stufenlos einstellbaren Teilgetriebe können an ihrer dem Summengetriebe abgewandten Seite ein gemeinsames Getriebeglied aufweisen. Dieses kann beispielsweise eine gemeinsame Eingangswelle oder eine gemeinsame Ausgangswelle sein. Ebenso kann dieses insbesondere ein direktes Getriebeglied der beiden stufenlos einstellbaren Getriebe sein, welches gemeinsam von beiden Teilgetrieben genutzt wird. Hierzu bietet sich beispielsweise bei Kegelreibringgetrieben einer der Kegel als gemeinsames Getriebeglied an. Durch eine derartige Ausgestaltung baut ein derartiges Getriebe verhältnismäßig kompakt und kostengünstig, da durch die Doppelnutzung die Gesamtzahl der Elemente des entsprechenden Getriebes minimiert werden kann.

Im vorliegenden Zusammenhang bezeichnet der Begriff "dem Summengetriebe abgewandte Seite" eine Richtung im Getriebestrang, die durch den Kraftfluss durch das Getriebe definiert ist und nicht zwingend mit den geometrischen bzw. räumlichen Verhältnissen übereinstimmen muss.

Eine Vielzahl stufenlos einstellbarer Getriebe weisen eine Hauptgetriebeebene auf, in welcher die wesentlichen Baugruppen, wie beispielsweise Ein- und Ausgangswellen, Ein- und Ausgangskegel oder ähnliche rotationssymmetrische Körper, angeordnet sind und auf diese Weise eine Getriebeebene definieren. Ein erfindungsgemäßes Getriebe baut besonders kompakt, wenn die beiden Hauptgetriebeebenen der beiden Teilgetriebe parallel zueinander angeordnet sind. Eine besonders flache Bauweise lässt sich erreichen, wenn die beiden Teilgetriebeebenen identisch sind. Ein derartig ausgestaltetes, erfindungsgemäßes Getriebe baut äußerst flach und ist darüber hinaus in der Lage, auch verhältnismäßig großen Drehmomenten zu begegnen. Unter anderem eignet sich ein derartiges Getriebe insofern insbesondere für Kleinlastkraftwagen mit Dieselmotoren, da es besonders gut hinsichtlich seines Bauraums auf eine Befestigung beispielsweise unter einer Ladefläche ausgelegt ist und darüber hinaus den hohen Drehmomenten moderner Dieselmotoren ohne Weiteres begegnen kann.

Darüber hinaus kann zwischen wenigstens einem der stufenlos einstellbaren Teilgetriebe und dem Summengetriebe ein weiteres einstellbares Teilgetriebe, wie insbesondere ein Schaltgetriebe bzw. ein Rückwärtsgang vorgesehen sein. Durch eine derartige Anordnung lassen sich Getriebe mit einem sehr weiten Antriebsverhalten, insbesondere mit der Möglichkeit eines stufenlosen Vorwärts- und Rückwärtsantriebes realisieren. Insbesondere ist es möglich, ein derartige Getriebe auch bei laufendem Antrieb derart in sich rückzukoppeln, dass der Abtrieb drehmomentfrei stillsteht.

Auch wenn vorliegende Erfindung den Wirkungsgrad des Gesamtgetriebes erheblich gegenüber Getrieben nach dem Stand der Technik erhöht, zeigen stufenlos einstellbare Getriebe, insbesondere unter verhältnismäßig konstanten Betriebsbedingungen, wie sie beispielsweise nach einem Anfahrvorgang oder auf der Landstraße bzw. auf der Autobahn entstehen, verhältnismäßig hohe Verluste. Um derartige Verluste zu vermeiden, insbesondere unter Betriebsbedingungen, bei welchen ein stufenlos einstellbares Getriebe nicht zwingend erforderlich ist, ist es von Vorteil, wenn wenigstens eines der stufenlos einstellbaren Teilgetriebe überbrückbar ist. Auf diese Weise kann beispielsweise unter den vorgenannten Betriebsbedingungen das stufenlos einstellbare Teilgetriebe mit seinen verhältnismäßig hohen Verlusten überbrückt werden, so dass unter diesen Betriebsbedingungen der Wirkungsgrad erhöht wird.

Weitere Vorteile, Ziele und Eigenschaften vorliegender Erfindung werden anhand nachfolgender Beschreibung anliegender Zeichnung erläutert. In Zeichnung zeigen:
- Figur 1: ein erstes erfindungsgemäßes Getriebe in schematischer Ansicht;
- Figur 2: ein erfindungsgemäßes Getriebe nach Figur 1 mit zusätzlichen Schaltmöglichkeiten;
- Figur 3: ein zweites erfindungsgemäßes Schaltgetriebe in ähnlicher Darstellung wie Figuren 1 und 2;
- Figur 4: ein drittes nicht beansprüchtes Schaltgetriebe;
- Figur 5: ein Schaltgetriebe nach Figur 4 mit zusätzlichen Schaltmöglichkeiten und
- Figur 6: ein alternatives Teilgetriebe, insbesondere für die Ausführungsformen nach den Figuren 1 bis 4.

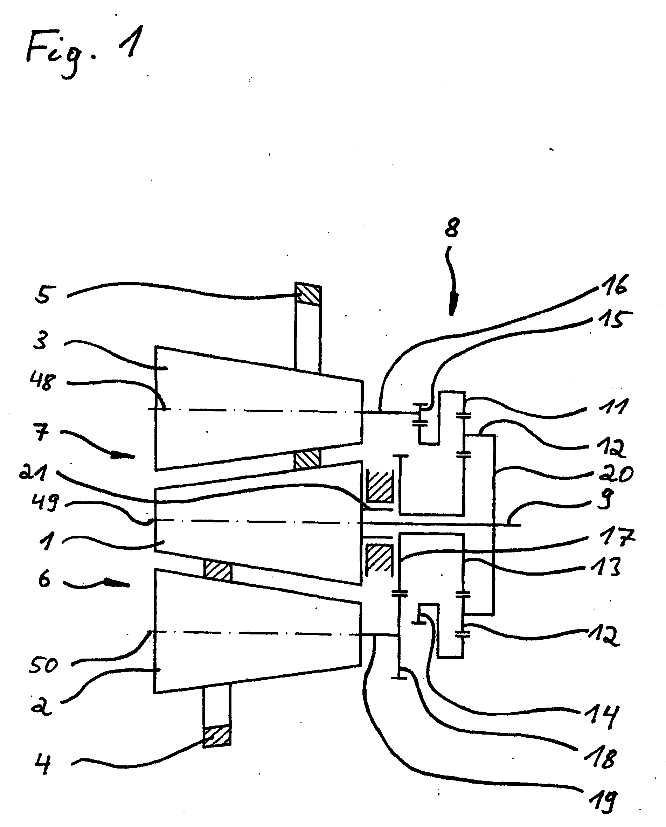

Das in Figur 1 dargestellte stufenlos einstellbare Getriebe weist einen Eingangskegel 1 sowie zwei Ausgangskegel 2, 3 auf, die jeweils über um die jeweiligen Ausgangskegel 2, 3 umlaufende Reibringe 4, 5 mit dem Eingangskegel 1 gekoppelt sind. Durch Verlagern der Reibringe 4, 5 entlang der zwischen den Kegeln 1, 2, 3 verbleibenden Spalte können die durch die Kegel 1 und 2 bzw. 1 und 3 gebildeten Teilgetriebe 6 bzw. 7 stufenlos eingestellt werden.

Ausgangsseitig sind die beiden Teilgetriebe 6, 7 bzw. die beiden Ausgangskegel 2, 3 über ein Summengetriebe 8 auf eine Ausgangswelle 9 geschaltet. Bei dem in Figur 1 dargestellten Ausführungsbeispiel umfasst das Summengetriebe 8 ein Planetengetriebe mit einem Außenkranz 11, Planetenrädern 12 und einem Sonnenrad 13. Der Außenkranz 11 ist mit einem weiteren Kranz 14 fest verbunden, welcher seinerseits mit einem Ritzel 15 kämmt, welches auf der Abtriebswelle 16 des Kegels 3 angeordnet ist. Ebenso ist das Sonnenrad 13 mit einem Rad 17 fest verbunden und läuft mit diesem um, welches seinerseits mit einem Ritzel 18 kämmt, welches auf der Abtriebswelle 19 des Kegels 2 angeordnet ist. Die Planetenräder 12 sind des Weiteren in einem Gestell 20 gelagert, welches mit der Abtriebswelle 9 verbunden ist und gemeinsam mit der Abtriebswelle 9 und den Planetenrädenn 12 umläuft. Somit ist ein Summengetriebe 8 bereitgestellt, bei welchem die Drehzahlen der Ritzel 15, 18 bzw. der Abtriebskegel 2, 3 je nach Übersetzungsverhältnis sowie Position der Reibringe 4, 5 zur Gesamtdrehzahl der Welle 9 aufsummiert werden. Vorzugsweise sind die Übersetzungsverhältnisse derart gewählt, dass bei identischer Position der Reibringe 4, 5, also gleicher Drehzahl der beiden Abtriebskegel 2, 3, die Planetenräder 12 hinsichtlich ihrer Eigenrotation in dem Gestell 20 stillstehen und lediglich gemeinsam mit dem Außenkranz 11 und dem Sonnenrad 13 umlaufen. Auf diese Weise lassen sich Verluste gerade im Dauerbetrieb minimieren. Zur Verlustminimierung dient darüber hinaus eine Kupplung 21, mit welcher die Abtriebswelle 9 unmittelbar, oder nach konkreter Ausführungsform über ein Übersetzungsgetriebe, mit dem Antriebskegel 1 verbunden werden kann, so dass insbesondere bei hohen und verhältnismäßig gleichförmigen Geschwindigkeiten, bei welchen die Vorzüge eines stufenlos einstellbaren Getriebes ohnehin nicht genutzt werden können und derartige stufenlos einstellbare Getriebe zu unnötigen Verlusten führen, die beiden Teilgetriebe 6, 7 überbrückt werden können.

Wie unmittelbar ersichtlich, addiert das Summengetriebe 8 die Drehzahlen der beiden Kegel 2, 3 auf und dient im Übrigen als Drehmomentwaage für die an diesem Kegel 2, 3 anfallenden Drehmomente.

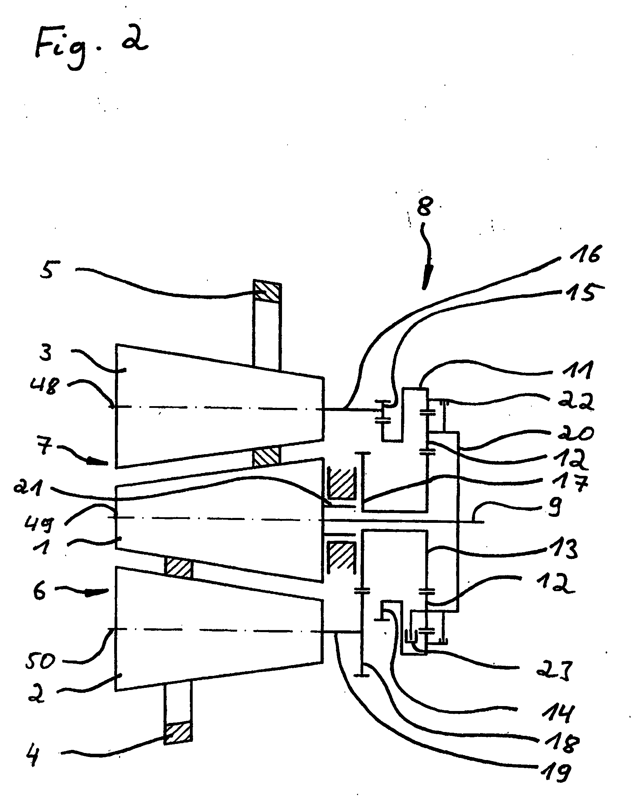

Das in Figur 2 dargestellte Ausführungsbeispiel entspricht im Wesentlichen dem Ausführungsbeispiel nach Figur 1, so dass identisch wirkende Baugruppen auch identisch beziffert sind und auf eine Wiederholung der identischen Funktionalitäten verzichtet wird. Über das Ausführungsbeispiel nach Figur 1 hinausgehend weist das Ausführungsbeispiel nach Figur 2 einerseits eine Feststellkupplung 22, mittels welcher das umlaufende Gestell 20 der Planetenräder 12 an dem Außenkranz 11 festgelegt werden kann, und andererseits eine Kupplung 23, mittels welcher das Gestell 20 sowie die Abtriebswelle 9 an einem im Übrigen nicht näher dargestellten, feststehenden Kupplungsgehäuse festgelegt werden kann, auf. Erstere Kupplung 22 dient dazu, den Stillstand der Planetenräder 12 in Eigenrotation in gegebenen Betriebszuständen zu erzwingen, so dass Verluste durch die Planetenräder 12 vermieden werden und das Gehäuse 20 sowie die Welle 9 gemeinsam mit dem Außenkranz 11 sowie dem Sonnenrad 13 umlaufen. Zweitere Kupplung 23 dient dazu, die Planetenräder 12 ortsfest, aber um ihre eigenen Achsen rotierbar zu halten. Diese Anordnung ist insbesondere für ein Zusammenspiel mit einem Getriebe vorgesehen, bei welchem das Getriebe derart ausgelegt ist, dass der Außenkranz und das Sonnenrad 13 auch gegensinnig umlaufen können bzw. gegensinnig umlaufen. Dieses kann beispielsweise durch ein zusätzliches, zwischengeschaltetes Zahnrad oder aber durch einen separaten Rückwärtsgang im Getriebestrang zwischen wenigstens einem der Teilgetriebe 6, 7 und dem Summengetriebe 8 realisiert werden. Bei einer derartigen Anordnung kann das Summengetriebe 8 über die beiden Teilgetriebe 6, 7 derart angesteuert werden, dass an der Welle 9 eine Drehzahl von 0 resultiert, obgleich der Antriebskegel 1 rotiert. In diesem Zustand kann die Kupplung 23 zum Festlegen des Getriebes genutzt werden. Bei einer derartigen Anordnung ist dann ein Anfahren der Abtriebswelle 9 lediglich durch ein Verstellen der Reibringe 4, 5 bzw. durch ein Verstellen der Teilgetriebe 6, 7 möglich.

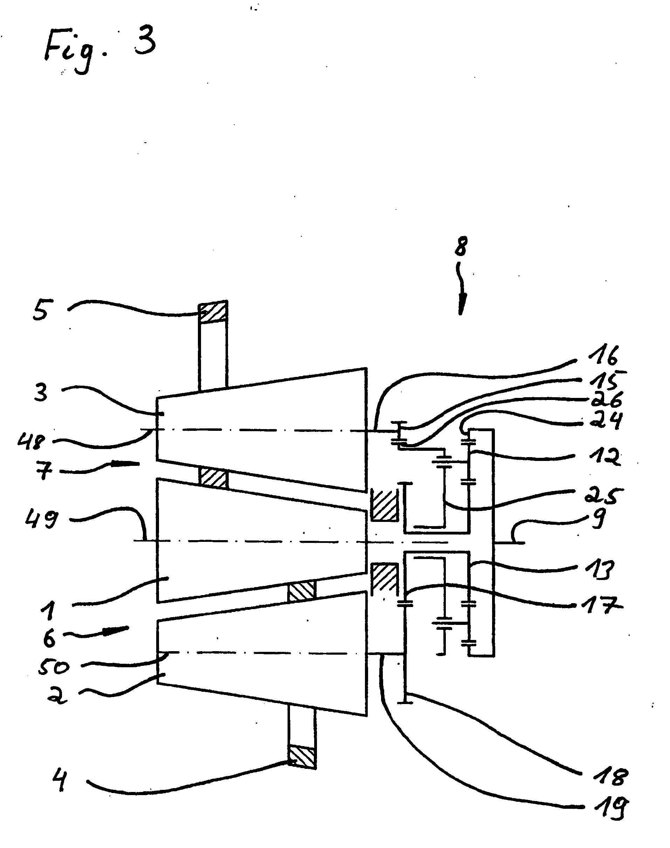

Auch die in Figur 3 dargestellte Anordnung entspricht im Wesentlichen der Anordnung nach Figur 1. Insofern sind die Teilgetriebe 6, 7 bei beiden Anordnungen identisch. Lediglich das Summiergetriebe 8 ist bei der Anordnung nach Figur 3 anders ausgestaltet, als dieses bei der Anordnung nach Figur 1 der Fall ist. Aus diesem Grunde wird auch an dieser Stelle auf eine detaillierte Erläuterung der übereinstimmenden Bestandteile und ihrer Funktionsweise verzichtet.

Bei dem in Figur 3 dargestellten stufenlos einstellbaren Getriebe ist die Abtriebswelle 9 unmittelbar mit einem Außenkranz 24 eines Planetengetriebes verbunden und läuft gemeinsam mit diesem um. Darüber hinaus sind die Planetenräder 12 in einem Gestell 25 gelagert, welches gemeinsam mit den Planetenräder 12 und einem Rad 26 umlaufen kann, wobei das Rad 26 mit dem Ritzel 15 auf der Abtriebswelle 6 des Kegels 3 kämmt. Das Sonnenrad 13 hingegen ist, wie bei den Ausführungsbeispielen nach Figuren 1 und 2, mit einem Rad 17 verbunden, welches mit dem Ritzel 18 auf der Abtriebswelle 19 des Kegels 2 kämmt.

Auch das in Figur 3 dargestellte Getriebe 8 wirkt somit als Summengetriebe und addiert bzw. subtrahiert die Drehzahlen der beiden Teilgetriebe 6, 7.

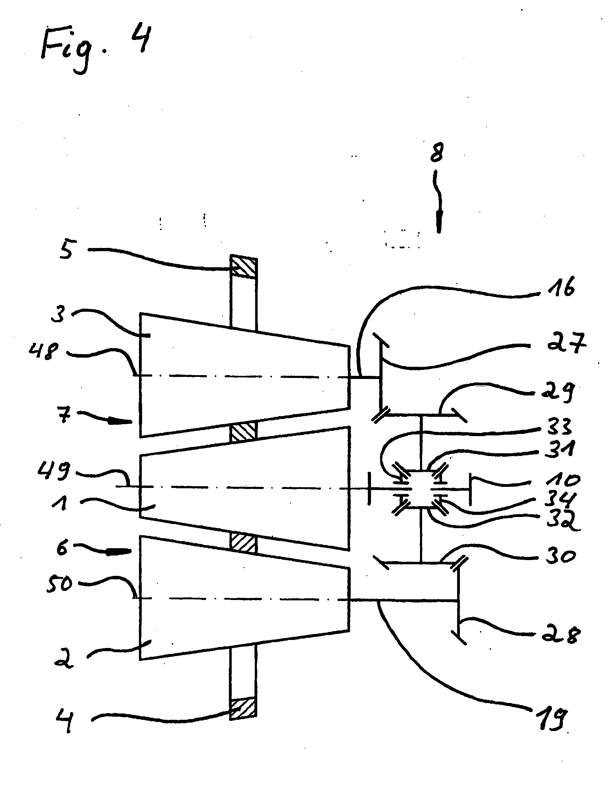

Auch die in Figur 4 dargestellte Anordnung entspricht hinsichtlich ihrer Teilgetriebe 6, 7 den Anordnungen, die in den Figuren 1 bis 3 dargestellt sind. Im Wesentlichen ist lediglich das Getriebe 8 anders ausgestaltet. Hierbei ist das Summengetriebe 8 über Kegelräder 27 bzw. 28, die jeweils an den Abtriebswellen 16 bzw. 19 der Kegel 3 bzw. 2 angeordnet sind, angetrieben. Hierfür kämmen die Kegelräder 27 bzw. 28 mit Kegelrädern 29 bzw. 30, welche ihrerseits mit den ortsfest um die eigene Achse rotierenden Kegelrädern 31 bzw. 32 des Differentials verbunden sind. Der Abrieb des Getriebes nach Figur 4 erfolgt über ein Zahnrad 10, welches mit den Achslagern der umlaufenden Kegelräder 33 bzw. 34 des Differentials, die ihrerseits mit den Kegelrädern 31 bzw. 32 des Differentials kämmen, verbunden ist. Wie unmittelbar ersichtlich, wird durch diese Anordnung ebenfalls ein Summengetriebe bereitgestellt.

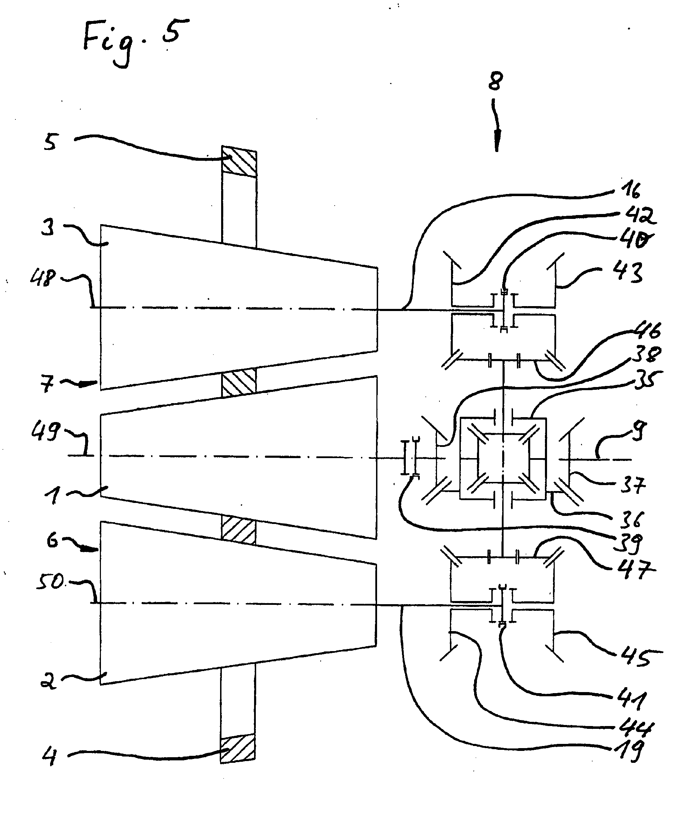

Das nicht beansprüchte Ausführungsbeispiel nach Figur 5 entspricht in seinem Grundaufbau dem Ausführungsbeispiel nach Figur 4, sodass auch hier das Summengetriebe 8 im Wesentlichen durch ein Differential 35, welches mit einem Abtriebsrad 36 über ein Kegelrad 37 die Abtriebswelle 9 antreibt, gebildet ist. Darüber hinaus kämmt das Abtriebsrad 36 mit einem Kegelrad 38, welches seinerseits über eine synchronisierte Kupplung 39 mit dem Antriebskegel 1 verbindbar ist, sodass nach Bedarf die beiden Teilgetriebe 6, 7 überbrückt werden können. Darüber hinaus sind bei dieser Anordnung die Abtriebswellen 16, 19 der Abtriebskegel 2, 3 über synchronisierte Kupplungen 40 bzw. 41 wahlweise auf Kegelräder 42, 43 bzw. 44, 45 schaltbar, welche ihrerseits mit Kegelrädern 46 bzw. 47 kämmen, die jeweils mit den um eine feststehende Achse umlaufenden Kegelrädern des Differentials verbunden sind. Durch die Kupplungen 40 bzw. 41 lässt sich somit auf einfache Weise die wirksame Drehrichtung der Teilgetriebe 6, 7 verändern, sodass das Getriebe nach Figur 5 ein äußerst vielseitiges Getriebeverhalten aufweist.

Es versteht sich, dass statt der dargestellten Kegelreibringgetriebe 6, 7 auch andere stufenlos einstellbare Getriebe als Teilgetriebe für derartige erfindungsgemäße stufenlos einstellbaren Getriebe vorteilhaft zur Anwendung kommen können. Wie unmittelbar aus den Figuren 1 bis 5 ersichtlich, weisen die Teilgeuiebe 6, 7, definiert durch die jeweiligen Kegelachsen 48, 49, 50, die jeweils parallel zueinander ausgerichtet sind, Teilgetriebeebenen auf, die alle in der Zeichnungsebene liegen. Auf diese Weise bauen diese Getriebe äußerst flach und eignen sich insbesondere für eine Anwendung bei LKW bzw. Klein-LKW, da sie beispielsweise unterhalb einer Ladefläche vorgesehen sein können. Diese Eignung gilt um so mehr, da die erfindungsgemäßen Getriebe durch die Verwendung zweier Teilgetriebe auch bei höheren Drehmomenten, wie diese durch moderne Dieselmotoren aufgebracht werden, mit gutem Wirkungsgrad arbeiten, weil extrem hohe Anpresskräfte durch die Verwendung zweier Teilgetriebe vermieden werden können.

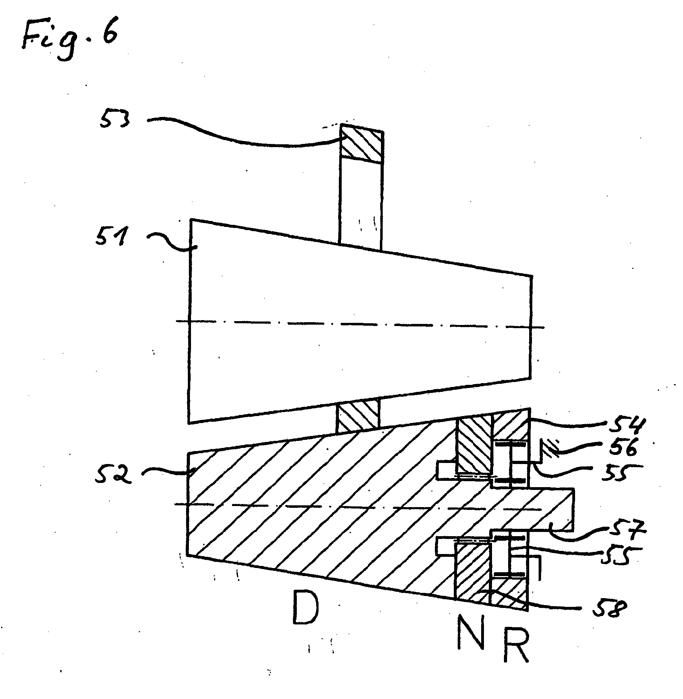

Wie bereits anhand der Beschreibung und Figuren 1 bis 4 angedeutet und beispielhaft anhand des Figurs 5 erläutert, kann durch die Wahl der Drehrichtungen, mit welchen die Teilgetriebe 6, 7 auf das Summengetriebe 8 wirken, die Charakteristik des Gesamtgetriebes erheblich beeinflusst werden. Insbesondere sind diesbezüglich Rückwärtsgänge bzw. die Drehrichtung wechselnde Getriebeteile von Vorteil. Eine diesbezüglich Alternative ist in Figur 6 beispielhaft für ein Teilgetriebe erläutert, wobei dieses Teilgetriebe zwei Kegel 51 und 52 umfasst, die über einen Ring 53 miteinander wechselwirken. Der Kegel 52 weist neben einem normalen Kegelbereich (D) einen gegensinnig umlaufenden Bereich (R) auf, was bei diesem Ausführungsbeispiel durch einen Kegelring 54 umgesetzt ist, der um Planeten 55 umläuft, die ihrerseits fest in dem Getriebegehäuse 56 gelagert sind und mit ihren Innenseiten an einer Kegelwelle 57 des Kegels 52 wälzen. Auf diese Weise rotiert der Kegelring 54 gegensinnig zum restlichen Teil des Kegels 52. Darüber hinaus weist der Kegel 52 einen neutralen Bereich (N) auf, der einen Ring 58 umfasst, welcher seinerseits frei drehbar an der Kegelwelle 57 gelagert ist.

Bei dieser Anordnung kann der Reibring 53 vom Hauptbereich (D) des Kegels 52 zunächst in den neutralen Bereich (N) verschoben werden, wobei sich der Kegelring 58 der durch den Hauptkegel 52 und den Reibring 53 vorgegebenen Rotation anpasst. Wird der Reibring 53 weiter in Richtung auf den rückwärtslaufenden Bereich (R) verlagert, so verlässt er andererseits den Hauptbereich (D), sodass sich die Drehrichtung des neutralen Bereichs (N) der Drehrichtung des rückwärtslaufenden Ringes 54 anpassen kann. Auf diese Weise wird äußerst kompakt ein Rückwärtsgang realisiert.

Es versteht sich, dass bei den in Figuren 1 bis 6 dargestellten Getriebe der Kraftfluss auch umgekehrt gewählt werden kann, sodass die Ausgangsglieder 9, 10 als Eingangsglieder und der Eingangskegel 1 als Ausgangskegel dient.

## Patentansprüche

1. Kegekeibringgetriebe mit wenigstens zwei stufenlos einstellbaren Teilgetrieben (6, 7), die parallel in einem Getriebestrang angeordnet sind, die beiden stufenlos einstellbaren Teilgetriebe (6, 7) an der einem Planetengetriebe abgewandten Seite ein gemeinsames Getriebeglied (1) aufweisen und das gemeinsame Getriebeglied ein von den beiden Teilgetrieben genutzter Kegel ist, **dadurch gekennzeichnet, dass** die beiden stufenlos einstellbaren Teilgetriebe (6, 7) derart über das Planetengetriebe auf ein Eingangs- bzw. Ausgangsglied (9, 10) geschaltet sind, dass identische Drehzahlen bzw. exakt festgelegte Drehzahlen für eines der Getriebeglieder der Teilgetriebe (6, 7) nicht erzwungen werden.

2. Kegelreibringgetriebe nach Anspruch 1, **dadurch gekennzeichnet, dass** zwei Getriebeglieder des Planetengetriebes mit den beiden Teilgetrieben verbunden sind und ein drittes Getriebeglied des Planetengetriebes als Ab- bzw. Antrieb genutzt wird.

3. Kegelreibringgetriebe nach Anspruch 1 oder 2, **dadurch gekennzeichnet, dass** die beiden stufenlos einstellbaren Teilgetriebe (6, 7) jeweils eine Eingangswellenachse (49) und eine im Wesentlichen parallel hierzu in einer Teilgetriebeebene angeordnete Ausgangswellenachse (48, 50) aufweisen, wobei die Teilgetriebeebenen parallel angeordnet sind.

4. Kegelreibringgetriebe nach Anspruch 3, **dadurch gekennzeichnet, dass** die beiden Teilgetriebeebenen identisch sind.

5. Kegelreibringgetriebe nach einem der Ansprüche 1 bis 4, **dadurch gekennzeichnet, dass** die beiden Teilgetriebe eine gemeinsame Eingangswelle (1, 49) oder eine gemeinsame Ausgangswelle (9) aufweisen.

6. Kegelreibringgetriebe mit wenigstens zwei stufenlos einstellbaren Teilgetrieben (6, 7), die parallel in einem Getriehestrang angeordnet sind, und die beiden stufenlos einstellbaren Teilgetriebe (6, 7) über ein Planetengetriebe auf ein Eingangs- bzw. Ausgangsglied (9, 10) geschaltet sind und **dadurch gekennzeichnet, dass**
(i) zwischen wenigstens einem der stufenlos einstellbaren Teilgetriebe (6, 7) und dem Planetengetriebe (8) ein weiteres einstellbares Teilgetriebe (21, 39, 40, 41) vorgesehen ist und/oder
(ii) wenigstens eines der stufenlos einstellbaren Teilgetriebe (6, 7) überbrückbar (21, 39) ist.

7. Kegelreibringgetriebe nach einem der Ansprüche 6, **dadurch gekennzeichnet, dass** das weitere einstellbares Teilgetriebe (21, 39, 40, 41) ein Schaltgetriebe bzw. ein Rückwärtsgang ist.

8. Kegelreibringgetriebe nach einem der Ansprüche 6 oder 7, **dadurch gekennzeichnet, dass** das Planetengetriebe weinigstens ein festlegbares Getriebeglied (12, 20) aufweist.

## Claims

1. A cone and ring gearbox with at least two infinitely variable sub gearboxes (6, 7), which are arranged parallel in a gear train, the two infinitely variable sub gearboxes (6, 7) have a common gearbox link (1) on the side facing away from a planetary gearbox and the common gearbox link is a cone used by both sub gearboxes, **characterised in that** the two infinitely variable sub gearboxes (6, 7) are connected via the planetary gearbox to an input or output link (9, 10) in such a manner that identical rotational speeds or exactly determined rotational speeds are not forced for one of the gearbox links of the sub gearboxes (6, 7).

2. The cone and ring gearbox according to Claim 1, **characterised in that** two gearbox links of the planetary gearbox are connected to the two sub gearboxes and a third gearbox link of the planetary gearbox is used as output or drive.

3. The cone and ring gearbox according to Claim 1 or 2, **characterised in that** the two infinitely variable sub gearboxes (6, 7) in each case have an input shaft axis (49) and an output shaft axis (48, 50) arranged essentially parallel thereto in a sub gearbox plane, wherein the sub gearbox planes are arranged in parallel.

4. The cone and ring gear box according to Claim 3, **characterised in that** the two sub gearbox planes are identical.

5. The cone and ring gearbox according to one of Claims 1 to 4, **characterised in that** the two sub gearboxes have a common input shaft (1, 49) or a common output shaft (9).

6. A cone and ring gear box with at least two infinitely variable sub gearboxes (6, 7) which are arranged in parallel in a gear train, and the two infinitely variable sub gearboxes (6, 7) are connected via a planetary gearbox to an input or output link (9, 10) and **characterised in that**
(i) between at least one of the infinitely variable sub gearboxes (6, 7) and the planetary gearbox (8), a further variable sub gearbox (21, 39, 40, 41) is provided and/or
(ii) at least one of the infinitely variable sub gearboxes (6, 7) can be bridged (21, 39).

7. The cone and ring gearbox according to Claim 6, **characterised in that** said further variable sub gearbox (21, 39, 40, 41) is a manual gearbox or a reverse gear.

8. The cone and ring gearbox according to one of Claims 6 or 7, **characterised in that** the planetary gearbox has at least one fixable gearbox link (12, 20).

## Revendications

1. Transmission à roues coniques à friction comportant au moins deux transmissions partielles (6, 7) à réglage continu, qui sont disposées parallèlement dans une chaîne cinématique, les deux transmissions partielles à réglage continu (6, 7) présentent sur le côté qui se détourne d'une transmission planétaire un organe de transmission (1) commun et l'organe de transmission commun est un cône utilisé par les deux transmissions partielles, **caractérisé en ce que** les deux transmissions partielles à réglage continu (6, 7) sont commutées par l'intermédiaire de la transmission planétaire sur un organe d'entrée, respectivement de sortie (9, 10) de telle sorte que des vitesses de rotation identiques, respectivement des vitesses de rotation déterminées avec exactitude ne soient pas surmontées pour un des organes de transmission des transmissions partielles (6, 7).

2. Transmission à roues coniques à friction selon la revendication 1, **caractérisée en ce que** deux organes de transmission de la transmission planétaire sont reliés aux deux transmissions partielles et un troisième organe de transmission de la transmission planétaire est utilisé comme sortie, respectivement entraînement.

3. Transmission à roues coniques à friction selon les revendications 1 ou 2, **caractérisée en ce que** les deux transmissions partielles à réglage continu (6, 7) présentent respectivement un axe d'arbre d'entrée (49) et un axe d'arbre de sortie (48, 50) disposé essentiellement parallèlement à celui-ci dans un plan de transmission partielle, dans laquelle les plans de transmission partielle sont disposés parallèlement.

4. Transmission à roues coniques à friction selon la revendication 3, **caractérisée en ce que** les deux plans de transmission partielle sont identiques.

5. Transmission à roues coniques à friction selon une des revendications 1 à 4, **caractérisée en ce que** les deux transmissions partielles présentent un arbre d'entrée commun (1, 49) ou un arbre de sortie commun (9).

6. Transmission à roues coniques à friction comportant au moins deux transmissions partielles à réglage continu (6, 7), qui sont disposées parallèlement dans une chaîne cinématique, et les deux transmissions partielles à réglage continu (6, 7) sont commutées par l'intermédiaire d'une transmission planétaire sur un organe d'entrée, respectivement de sortie (9, 10) et **caractérisée en ce que**
(i) entre au moins une des transmissions partielles à réglage continu (6, 7) et une transmission planétaire (8) une transmission partielle réglable supplémentaire (21, 39, 40, 41), comme notamment un changement de vitesses ou une marche arrière, est prévue et/ou
(ii) au moins une des transmissions partielles à réglage continu (6, 7) peut être shuntée (21, 39).

7. Transmission à roues coniques à friction selon la revendication 6, **caractérisée en ce que** la transmission partielle réglable supplémentaire (21, 39, 40, 41) est un changement de vitesses ou une marche arrière.

8. Transmission à roues coniques à friction selon une des revendications 6 ou 7, **caractérisée en ce que** la transmission planétaire présente au moins un organe de transmission (12, 20) déterminable.
